# EUROPÄISCHE PATENTSCHRIFT

(11) **EP 2 774 163 B1**
(45) Veröffentlichungstag und Bekanntmachung des Hinweises auf die Patenterteilung: **22.02.2017**
(21) Anmeldenummer: 12779087.1
(22) Anmeldetag: 02.11.2012
(51) Int. Cl.: H01H 71/12, H01H 71/74, H01H 73/20, H01H 47/00

(54) **LEISTUNGSSCHALTER MIT MINDESTENS EINEM KONTAKT ZUM ABGREIFEN EINER SPANNUNG**
CIRCUIT BREAKER WITH AT LEAST ONE VOLTAGE TAP CONTACT
DISJONCTEUR DOTÉ D'AU MOINS UN CONTACT DE PRISE DE TENSION

(30) Priorität: 02.11.2011 EP 11187495
(43) Veröffentlichungstag der Anmeldung: 10.09.2014
(73) Patentinhaber: Eaton Electrical IP GmbH & Co. KG, 12529 Schönefeld (DE)
(72) Erfinder: SUCHALLA, Marc, 47198 Duisburg (DE); TANDA, Kurt, 51377 Leverkusen (DE); SCISLAK, Ireneusz, 50769 Köln (DE); FREYERMUTH, Thomas, 53505 Kalenborn (DE); SCHMIDT, Rainer, 53757 Sankt Augustin (DE); ZUMBECK, Alexander, 53332 Bornheim (DE); REIDT, Georg, 53913 Swisstal (DE)
(74) Vertreter: Eaton IP Group EMEA
(86) Internationale Anmeldenummer: PCT/EP2012/071720
(87) Internationale Veröffentlichungsnummer: WO 2013/064631

(56) Entgegenhaltungen:
- EP-A1- 2 079 091
- WO-A1-2008/034395
- FR-A1- 2 794 281

## Beschreibung

Die Erfindung betrifft einen Leistungsschalter mit einem Schaltergehäuse und mit mindestens einem Kontakt zum Abgreifen einer Spannung an einem Primärleiter. Ein gattungbildender Leistungsschalter ist aus der Druckschrift FR 2 794 281 bekannt.

Für eine Energiemessung an einem Leistungsschalter, beispielsweise für eine Energieverbrauchsanalyse, wird ein Spannungsabgriff benötigt. Bisher wurde dazu ein externes Gerät außerhalb des Leistungsschalters eingesetzt. Um die Energiemessung im Schalter selbst durchführen zu können, wird auch ein interner Spannungsabgriff im Schalter notwendig. Aus der Druckschrift US 2009/0190289 A1 ist ein Leistungsschalter bekannt, bei dem ein Spannungsabgriff in dem Leistungsschalter selbst integriert ist, so dass auf ein externes Modul verzichtet werden kann. Der Abgriff einer derart hohen Spannung, wie sie an einem Primärleiter eines Leistungsschalters anliegt, erfordert eine Reduzierung der Spannung mit Hilfe von Spannungsteilern bis auf ein für eine Messelektronik verträgliches Maß. Das Hochspannungssignal über Leiterbahnen, Leitungen, Adapter und Kontakte zu führen, kann Verschmutzung, hohen Temperaturen, zu möglichen Kriechstrecken und störender Beeinflussung der Elektronik durch elektrische oder elektromagnetische Effekte führen. Eine Schwierigkeit besteht unter diesen Umständen darin, ausreichend Platz für die notwendigen zusätzliche Elemente in einem Schaltergehäuse zu schaffen und eine sichere Kontaktierung zu dem Primärleiter zu gewährleisten.

Eine Aufgabe der Erfindung besteht darin, eine hinsichtlich der genannten Schwierigkeiten verbesserte Kontaktierung für den internem Spannungsabgriff bei einem Leistungsschalter zur Verfügung zu stellen.

Die Aufgabe wird durch den Leistungsschalter gemäß dem Hauptanspruch gelöst. In den Unteransprüchen sind bevorzugte Ausführungsformen, sowie vorteilhafte Weiterbildungen angegeben.

Der erfindungsgemäße Leistungsschalter weist ein Schaltergehäuse und mindestens einem Kontakt zum Abgreifen einer Spannung an einem Primärleiter auf. Das Schaltergehäuse im Sinne der Erfindung stellt die äußere Begrenzung des Leistungsschalters dar und beinhaltet alle wesentlichen Komponenten. So ist auch ein gegebenenfalls getrennt vorliegendes Wandlergehäuse durch das Schaltergehäuse umfasst. Erfindungsgemäß ist zu einer Herstellung des Kontakts zu dem Primärleiter mindestens ein Federelement vorgesehen. Das Federelement kann dabei eine durch Federwirkung unterstützte Vorrichtung oder eine Feder im Sinne eines elastischen Bauteils an sich sein. Zur Kontaktierung ist das Federelement entweder selbst elektrisch leitend oder es unterstützt ein elektrisch leitendes Bauteil. Ein Vorteil bei der Verwendung eines Federelements besteht darin, eine sichere und fehlertolerantere Kontaktierung mit Primärleiter zu gewährleisten. Erfindungsgemäß ist ein Spannungsteiler zur Reduzierung der abgegriffenen Spannung des Primärleiters zwischen dem Federelement und einer Schalterelektronik angeordnet.

Erfindungsgemäß ist vorgesehen, dass der Spannungsteiler auf einer Leiterplatte angeordnet ist, wobei das Federelement an der Leiterplatte angelenkt ist.

Gemäß einer zweiten bevorzugten Ausführungsform ist vorgesehen, dass der Spannungsteiler über eine Leiterbahn mit dem Federelement verbunden ist.

Erfindungsgemäß ist die Leiterplatte in einer Seitenwand des Schaltergehäuses angeordnet, insbesondere in derjenigen Seitenwand des Schaltergehäuses, durch welche der Primärleiter in das Schaltergehäuse geführt ist.

Weitere bevorzugte Ausgestaltungen, die für die erste und zweite Ausführungsform anwendbar sind, sehen vor, dass das Federelement durch eine Spiralfeder gebildet ist, oder dass das Federelement durch eine Blattfeder gebildet ist, oder dass das Federelement durch eine elastisch spannbare, teleskopierbare Anordnung, insbesondere einen sogenannten spring-load contact, gebildet ist.

Eine weitere bevorzugte Ausgestaltungen, die für die erste und zweite Ausführungsform anwendbar ist, besteht darin, dass das Federelement durch eine Mehrzahl von Blattfedern im Sinne eines federnden Kammkontakts gebildet ist, wobei die Blattfedern in einer Aufnahmeöffnung für den Primärleiter angeordnet sind. Die Aufnahmeöffnung für den Primärleiter ist dabei insbesondere in einem Wandlerblock angeordnet. Ein Kontakt der Blattfedern des Federelements mit dem Primärleiter ist so vorteilhaft bei einer Montage des Primärleiters herstellbar.

Einer Mehrzahl von Primärleitern bei einem mehrpoligen Leistungsschalter ist vorzugsweise eine entsprechende Anzahl von Kontakten zum Abgreifen der Spannung zugeordnet. In dem Fall ist weiterhin bevorzugt eine Mehrzahl von Leiterplatten vorhanden, die in einem gemeinsamen Adaptersammelgehäuse angeordnet sind.

Nachfolgend wird die Erfindung anhand von Ausführungsbeispielen mit Bezug auf die Zeichnungen näher erläutert. Die Ausführungen sind lediglich beispielhaft und schränken den allgemeinen Erfindungsgedanken nicht ein.

Es zeigen
Figur 1 eine Ausführungsform des erfindungsgemäßen Leistungsschalters mit drei unterschiedlichen Ausführungsbeispielen eines Kontaktelements;
Figur 2 ein Adaptersammelgehäuse zur Aufnahme der Adapter gemäß Figur 1;
Figur 3 ein Kontaktelement gemäß Figur 1 im Detail;
Figur 4 ein weiteres Kontaktelement gemäß Figur 1 im Detail;
Figur 5 noch ein weiteres Kontaktelement gemäß Figur 1 im Detail;
Figur 6 eine weitere Ausführungsform des erfindungsgemäßen Leistungsschalters;
Figur 7 ein Detail der Ausführungsformgemäß Figur 6.

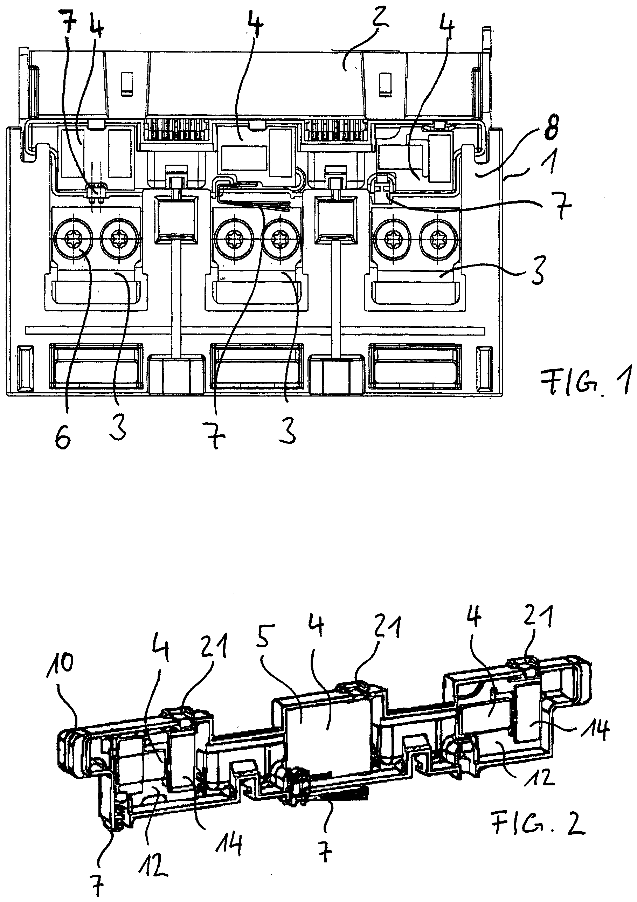

In der Figur 1 ist eine Ausführungsform des erfindungsgemäßen Leistungsschalters in einer Teilansicht dargestellt. Erkennbar ist die Seitewand 8 des Schaltergehäuses 1, durch welche die Primärleiter 3 in das Schaltergehäuse 1 geführt sind, innerhalb dessen sich ein Wandler des Leistungsschalters befindet. Der in dem dargestellten Ausführungsbeispiel innerhalb des Gehäuses 1 nicht sichtbar angeordnete Wandler kann bei abweichenden Bauformen von Leistungsschaltern ein eigenes Wandlergehäuse aufweisen, welches beispielsweise außen an dem eigentlichen Schaltergehäuse 1 angeordnet ist. Im Sinne der Erfindung soll auch in dem Fall das Wandlergehäuse als Teil des Schaltergehäuses verstanden werden. Primärleiter 3 führen in das Innere des Schaltergehäuses 1 hinein, erstrecken sich durch den Wandlerblock hindurch und verlaufen anschließend weiter in die eigentliche Schaltkammer (nicht dargestellt) des Leistungsschalters hinein. Die Primärleiter 3 sind durch Befestigungsmittel 6, in der Regel Schrauben, an dem Wandler befestigt. Ein Elektronikmodul 2 ist auf dem Wandler angeordnet. Die darin angeordneten elektronischen Schaltungen dienen zur Steuerung des Leistungsschalters anhand der durch den Wandler übertragenen Signale.

Erfindungsgemäß weist der Leistungsschalter mindestens einen Kontakt zum Abgriff einer Spannung an einem der Primärleiter 3 auf. In der Figur 2 sind Spannungsteiler 14 zur Reduzierung der abgegriffenen Spannung des Primärleiters 3 erkennbar, welche zwischen die Federelemente 7 und die Schalterelektronik 2 geschaltet sind. Die Spannungsteiler 14 sind auf Leiterplatten 12 angeordnet, wobei die Federelemente 7 an den Leiterplatten 12 angelenkt sind. Die Leiterplatten 12 mit Spannungsteilern 14, Anschlüssen für die Federelemente 7 und Anschlüssen 21 zur Weiterleitung eines Signals an die Schalterelektronik 2 bilden einen Adapter 4, welcher ein Gehäuse und/oder einen Gehäusedeckel 5 aufweisen kann. Die adapter 4 sind in der Ausführungsform in einem Adaptersammelgehäuse 10 untergebracht, mit dem sie in eine Ausnehmung der Seitenwand 8 des Schaltergehäuses 1 entsprechend Figur 1 eingesetzt werden.

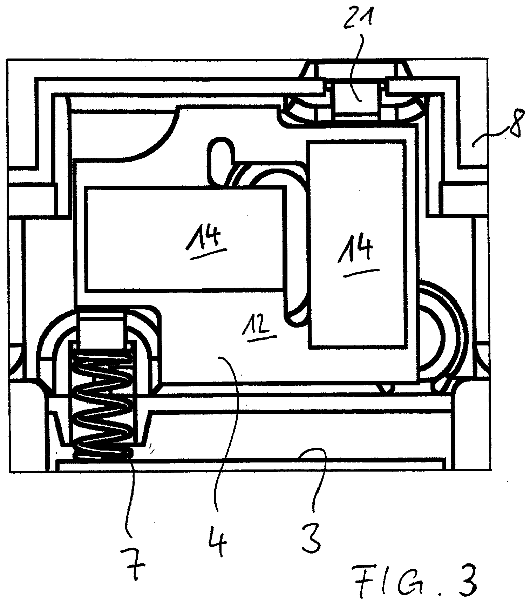

Gemäß der Darstellung in Figur 1 sind innerhalb des Schaltergehäuses 1 drei Adapter 4 mit Leiterplatten 12 zur Reduzierung der abgegriffenen Spannungen der drei Primärleiter 3 vorgesehen. Die Figuren 3, 4 und 5 zeigen jeweils einen Adapter 4 mit Federelement 7 im Detail. Die Reduzierung der Spannung erfolgt durch die Spannungsteiler 14. Die dazu vorgesehenen Widerstände sind auf den Leiterplatten 12 angeordnet. Die Adapter 4 sind vorzugsweise außerhalb des Elektronikmoduls 2 angeordnet, um eine Beeinflussung der Elektronik durch elektrische oder elektromagnetische Effekte zu verringern.

Die Darstellung in Figur 1 illustriert eine Variante der Positionierung der Adapter 4, die hier innerhalb der Seitenwand 8 angeordnet sind, vorzugsweise in einem gemeinsamen Adaptersammelgehäuse 10, das in der Figur 2 einzeln dargestellt ist. Dazu ist die Seitenwand 8 teilweise aufgebrochen dargestellt. Diese Position ist besonders vorteilhaft, da eine Kontaktierung der Primärleiter 1 erfindungsgemäß mittels eines Federelements 7 über deren Oberfläche oder über Befestigungsmittel der Primärleiter 3 erfolgen kann. Dazu kann die Seitenwand 8 entsprechende Kanäle oder Bohrungen zwischen den Adaptern 4 und den Primärleitern 3 aufweisen. Außerdem kann die Weiterleitung des reduzierten Spannungssignals zu dem Elektronikmodul 2 auf direktem Weg erfolgen, wie nachfolgend im Zusammenhang mit den Figuren 3, 4 und 5 erläutert wird. Die verschiedenen Adapter 4 dienen hier lediglich zur Veranschaulichung von möglichen Ausführungsbeispielen des Federelements 7. In der Regel werden in einem Leistungsschalter gleichartige Adapter 4 eingesetzt.

In den Figuren 3, 4 und 5 ist jeweils eines der Federelemente 7 gemäß Figur 1 im Detail dargestellt. Die Kontaktelemente 7 stellen den Kontakt zu dem jeweiligen Primärleiter 3 her. Ansonsten sind auf der jeweiligen Leiterplatte 12 der Adapter 4 beispielhaft Spannungsteiler 14 angedeutet.

Das Kontaktelement 7 gemäß Figur 3 umfasst eine an der Leiterplatte 12 befestigte und angeschlossene Druckfeder in Form einer Spirale, die gegen die Oberfläche des Primärleiters 3 oder auch gegen eine Befestigungsschraube des Primärleiters 3 vorgespannt ist und die Hochspannung von dem Primärleiter 3 zu dem Adapter 4 überträgt.

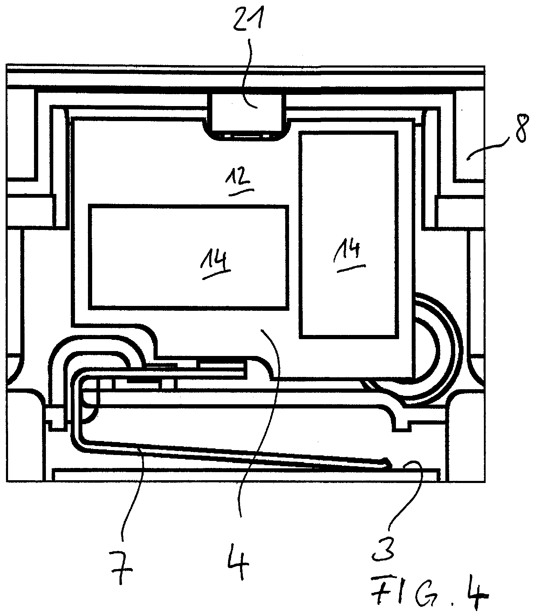

Das Kontaktelement 7 gemäß Figur 4 umfasst eine an der Leiterplatte 12 befestigte und angeschlossene Blattfeder, die gegen die Oberfläche des Primärleiters 3 oder auch gegen eine Befestigungsschraube des Primärleiters 3 vorgespannt ist und die Hochspannung von dem Primärleiter 3 zu dem Adapter 4 überträgt.

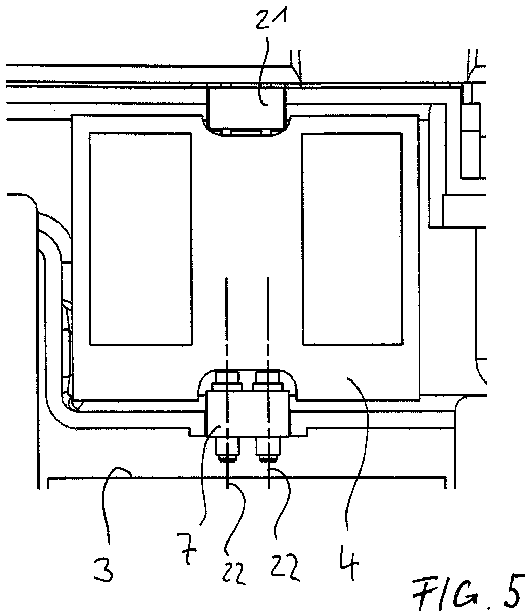

Das Kontaktelement 7 gemäß Figur 5 umfasst einen an der Leiterplatte 12 befestigten und angeschlossenen sogenannten spring-load Kontakt, dessen zwei insbesondere teleskopierbare Kontaktstifte 22 mittels Federkraft gegen die Oberfläche des Primärleiters 3 oder auch gegen eine Befestigungsschraube des Primärleiters 3 vorgespannt sind und die Hochspannung von dem Primärleiter 3 zu dem Adapter 4 übertragen. Die Lage der Kontaktstifte 22 ist durch Linien lediglich angedeutet.

Vergleichbare Kontaktelemente können auch zur Übertragung des reduzierten Spannungssignals an das Elektronikmodul 2 genutzt werden. Die Kontakte zu dem Elektronikmodul sind in den Figuren 3 bis 5 mit dem Bezugszeichen 21 gekennzeichnet.

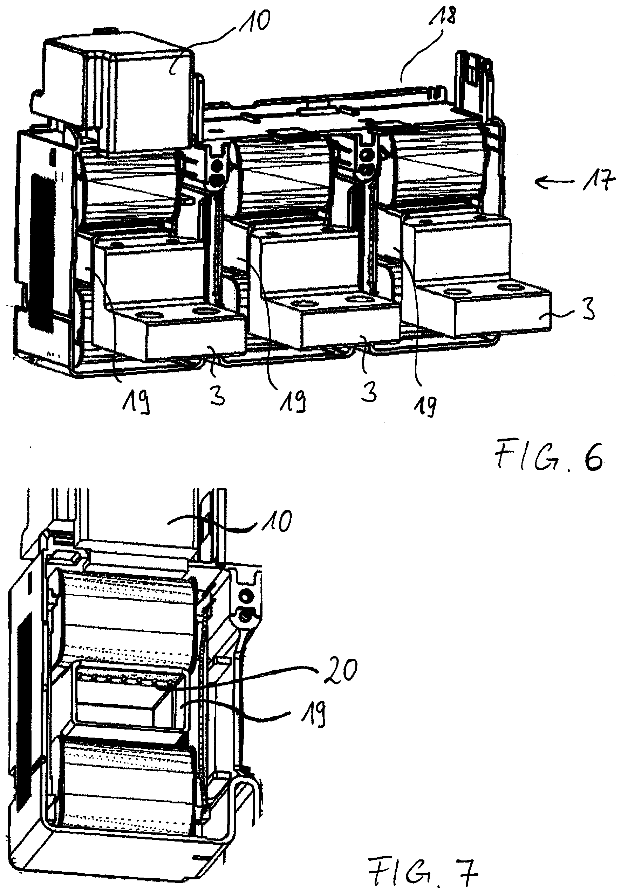

Die Figuren 6 und 7 zeigen eine weitere Ausführungsform des erfindungsgemäßen Leistungsschalters. In der Figur 6 ist der Wandler 17 ohne das Schaltergehäuse 1 dargestellt. Eine Aufnahme 18 ist für das Einsetzen des Elektronikmoduls 2 vorbereitet. Des Weiteren ist zur besseren Erkennbarkeit eine Vergussmasse nicht dargestellt, so dass Einschübe 19 erkennbar sind, durch die die Primärleiter 3 eingeschoben werden. Ein federnder Kammkontakt 20 ist in der Detailansicht gemäß Figur 7 erkennbar, in der auch der Primärleiter 3 nicht dargestellt ist. Der Kontakt wird bei der Montage des Primärleiters 3 in dem Wandler 17 dauerhaft hergestellt. Die Adapter 4 mit den Leiterplatten 12 und den Spannungsteilern 14 zur Reduzierung der Spannung befinden sich in der dargestellten Ausführungsform in einem Adaptersammelgehäuse 10 und sind über nicht dargestellte Leiterbahnen mit den federnden Kammkontakten 20 verbunden.

### Bezugszeichenliste

- 1: Schaltergehäuse
- 2: Schaltelektronik, Elektronikmodul
- 3: Primärleiter
- 4: Adapter
- 5: Adapterdeckel
- 6: Befestigungsmittel
- 7: Federelement, Kontaktelement
- 8: Seitenwand
- 10: Adaptersammelgehäuse
- 12: Leiterplatte
- 14: Spannungsteiler
- 17: Wandler
- 18: Aufnahme
- 19: Einschub
- 20: Blattfederanordnung, federnder Kammkontakt
- 21: Kontakt zum Elektronikmodul
- 22: Kontaktstifte

## Patentansprüche

1. Leistungsschalter mit einem Schaltergehäuse (1) und mit mindestens einem Kontakt zum Abgreifen einer Spannung an einem Primärleiter (3), bei dem zu einer Herstellung des Kontakts zu dem Primärleiter (3) mindestens ein Federelement (7, 20) vorgesehen ist, wobei ein Spannungsteiler (14) zur Reduzierung der abgegriffenen Spannung des Primärleiters (3) zwischen dem Federelement (7, 20) und einer Schalterelektronik (2) auf einer Leiterplatte (12) angeordnet ist, wobei das Federelement (7) an der Leiterplatte angelenkt ist, **dadurch gekennzeichnet dass** die Leiterplatte (12) in einer Seitenwand (8) des Schaltergehäuses (1) angeordnet ist.

2. Leistungsschalter nach Anspruch 1, **dadurch gekennzeichnet, dass** der Spannungsteiler (14) über eine Leiterbahn mit dem Federelement (20) verbunden ist.

3. Leistungsschalter nach Anspruch 1, **dadurch gekennzeichnet, dass** die Leiterplatte (12) in derjenigen Seitenwand (8) des Schaltergehäuses (1) angeordnet ist, durch welche der Primärleiter (3) in das Schaltergehäuse geführt ist.

4. Leistungsschalter nach einem der vorhergehenden Ansprüche, **dadurch gekennzeichnet, dass** das Federelement (7) durch eine Spiralfeder gebildet ist.

5. Leistungsschalter nach einem der Ansprüche 1 bis 3, **dadurch gekennzeichnet, dass** das Federelement (7) durch eine Blattfeder gebildet ist.

6. Leistungsschalter nach einem der Ansprüche 1 bis 3, **dadurch gekennzeichnet, dass** das Federelement (7) durch eine elastisch spannbare, teleskopierbare Anordnung gebildet ist.

7. Leistungsschalter nach einem der Ansprüche 1 bis 3, **dadurch gekennzeichnet, dass** das Federelement (20) durch Mehrzahl von Blattfedern gebildet ist, wobei die Blattfedern in einer Aufnahmeöffnung (18) für den Primärleiter (3) angeordnet sind.

8. Leistungsschalter nach Anspruch 7, **dadurch gekennzeichnet, dass** die Aufnahmeöffnung (18) für den Primärleiter in einem Wandlerblock (17) angeordnet ist.

9. Leistungsschalter nach einem der Ansprüche 7 oder 8, **dadurch gekennzeichnet, dass** ein Kontakt der Blattfedern des Federelements (20) mit dem Primärleiter (3) bei einer Montage des Primärleiters herstellbar ist.

10. Leistungsschalter nach einem der vorhergehenden Ansprüche, **dadurch gekennzeichnet, dass** einer Mehrzahl von Primärleitem (3) bei einem mehrpoligen Leistungsschalter eine entsprechende Anzahl von Kontakten zum Abgreifen der Spannung zugeordnet ist.

11. Leistungsschalter nach Anspruch 10, **dadurch gekennzeichnet, dass** eine Mehrzahl von Leiterplatten (12) in einem gemeinsamen Adaptergehäuse (10) angeordnet ist.

## Claims

1. Circuit breaker comprising a circuit breaker housing (1) and at least one contact for tapping a voltage from a primary conductor (3), on which at least one spring element (7, 20) is provided for making contact with the primary conductor (3), wherein a voltage divider (14) for reducing the voltage tapped from the primary conductor (3) is arranged between the spring element (7, 20) and a circuit breaker electronics unit (2) on a printed circuit board (12), wherein the spring element (7) is articulated on the printed circuit board, **characterised in that** the printed circuit board (12) is arranged on a side wall (8) of the circuit breaker housing (1).

2. Circuit breaker according to claim 1, **characterised in that** the voltage divider (14) is connected to the spring element (20) via a conductor track.

3. Circuit breaker according to claim 1, **characterised in that** the printed circuit board (12) is arranged on that side wall (8) of the circuit breaker housing (1) through which the primary conductor (3) is fed into the circuit breaker housing.

4. Circuit breaker according to any of the previous claims, **characterised in that** the spring element (7) is formed by a coil spring.

5. Circuit breaker according to any of claims 1 to 3, **characterised in that** the spring element (7) is formed by a leaf spring.

6. Circuit breaker according to any of claims 1 to 3, **characterised in that** the spring element (7) is formed by a spring-loadable telescopic arrangement.

7. Circuit breaker according to any of claims 1 to 3, **characterised in that** the spring element (20) is formed by a plurality of leaf springs, wherein the leaf springs are arranged in a receiving opening (18) for the primary conductor (3).

8. Circuit breaker according to claim 7, **characterised in that** the receiving opening (18) for the primary conductor is arranged in a converter block (17).

9. Circuit breaker according to either of claims 7 or 8, **characterised in that** a contact between the leaf springs of the spring element (20) and the primary conductor (3) can be made when the primary conductor is mounted.

10. Circuit breaker according to any of the previous claims, **characterised in that** a plurality of primary conductors (3) in a multi-pole circuit breaker is assigned a corresponding number of contacts for tapping the voltage.

11. Circuit breaker according to claim 10, **characterised in that** a plurality of printed circuit boards (12) is arranged in a shared adaptor housing (10).

## Revendications

1. Disjoncteur avec un boîtier (1) et avec au moins un contact pour le prélèvement d'une tension au niveau d'un conducteur primaire (3), dans lequel au moins un élément élastique (7, 20) est prévu pour un établissement du contact avec le conducteur primaire (3), dans lequel un diviseur de tension (14) pour réduire la tension prélevée du conducteur primaire (3) entre l'élément élastique (7, 20) et un système électronique de commutation (2) est disposé sur un circuit imprimé (12), dans lequel l'élément élastique (7) est articulé sur le circuit imprimé, **caractérisé en ce que** le circuit imprimé (12) est disposé dans une paroi latérale (8) du boîtier (1).

2. Disjoncteur selon la revendication 1, **caractérisé en ce que** le diviseur de tension (14) est relié à l'élément élastique (20) via un circuit conducteur.

3. Disjoncteur selon la revendication 1, **caractérisé en ce que** le circuit imprimé (12) est disposé dans la paroi latérale (8) du boîtier (1) à travers laquelle est guidé le conducteur primaire (3) dans le boîtier.

4. Disjoncteur selon l'une quelconque des revendications précédentes, **caractérisé en ce que** l'élément élastique (7) est formé par un ressort hélicoïdal.

5. Disjoncteur selon l'une quelconque des revendications 1 à 3, **caractérisé en ce que** l'élément élastique (7) est formé par un ressort à lame.

6. Disjoncteur selon l'une quelconque des revendications 1 à 3, **caractérisé en ce que** l'élément élastique (7) est formé par un agencement télescopique pouvant être tendu élastiquement.

7. Disjoncteur selon l'une quelconque des revendications 1 à 3, **caractérisé en ce que** l'élément élastique (20) est formé par une pluralité de ressorts à lame, dans lequel les ressorts à lame sont disposés dans une ouverture de réception (18) pour le conducteur primaire (3).

8. Disjoncteur selon la revendication 7, **caractérisé en ce que** l'ouverture de réception (18) pour le conducteur primaire est disposée dans un bloc convertisseur (17).

9. Disjoncteur selon l'une quelconque des revendications 7 ou 8, **caractérisé en ce qu'**un contact des ressorts à lame de l'élément élastique (20) peut être établi avec le conducteur primaire (3) lors d'un montage du conducteur primaire.

10. Disjoncteur selon l'une quelconque des revendications précédentes, **caractérisé en ce que**, dans le cas d'un disjoncteur multipolaire, un nombre correspondant de contacts de prélèvement de la tension est affecté à une pluralité de conducteurs primaires (3).

11. Disjoncteur selon la revendication 10, **caractérisé en ce qu'**une pluralité de circuits imprimés (12) est disposée dans un boîtier d'adaptateur (10) commun.
